# EUROPÄISCHE PATENTSCHRIFT

(11) **EP 0 320 698 B1**
(45) Veröffentlichungstag und Bekanntmachung des Hinweises auf die Patenterteilung: **24.02.1993**
(21) Anmeldenummer: 88119941.8
(22) Anmeldetag: 30.11.1988
(51) Int. Cl.: B29D 29/08

(54) **Verfahren zur Herstellung von profilierten, insb. gezahnten Gurten aus Gummi od. dgl.**
Process for making shaped belts, in particular toothed belts, from rubber or the like
Procédé de fabrication de courroies avec profil, en particulier de courroies dentées, en caoutchouc ou en matériau similaire

(30) Priorität: 12.12.1987 DE 3742168; 07.01.1988 DE 3800172
(43) Veröffentlichungstag der Anmeldung: 21.06.1989
(73) Patentinhaber: Jäger, Arnold, D-31303 Burgdorf (DE)
(72) Erfinder: Jäger, Andreas, D-3167 Burgdorf (DE)
(74) Vertreter: Depmeyer, Lothar

(56) Entgegenhaltungen:
- EP-A- 0 050 173
- EP-A- 0 153 049
- EP-A- 0 176 945
- EP-A- 0 182 650
- CA-A- 898 672
- US-A- 4 003 686
- US-A- 4 416 649
- US-A- 4 584 157
- PATENT ABSTRACTS OF JAPAN, Band 7, Nr. 110 (M-214)[1255], 13. Mai 1983; & JP-A-58 031 733 (MITSUBOSHI BELT K.K.) 24-02-1983

## Beschreibung

Die Erfindung betrifft ein Verfahren und ein Werkzeug zur Herstellung von profilierten, gezahnten Gurten aus Gummi od. dgl. nach dem Gattungsbegriff des 1. Patentanspruchs bzw. des 14. Patentanspruchs
Um einen profilierten insb. einen zum Kämmem der Gurtzähne geeigneten Gurt herstellen zu können, bedarf es eines grossen Aufwandes im Hinblick auf die Formen, in denen die Gurte abgeformt und vulkanisiert werden können. Diese Formen sind in der Herstellung sehr teuer.

Der Erfindung liegt die Aufgabe zugrunde, ein Verfahren aufzuzeigen, das eine vergleichsweise genaue Profilierung, insb. aber eine genaue Zahnform ermöglicht, jedoch wesentlich einfachere technische Bedingungen erfordert, insb. auch einen wesentlich geringeren Aufwand benötigt, wenn die Verzahnung geändert werden muss.

Diese Aufgabe wird erfindungsgemäss durch die Merkmale nach dem Kennzeichnungsteil des 1. Patentanspruchs bzw. des 14. Patentanspruchs gelöst. Vorteilhafte Ausgestaltungen der Erfindung ergeben sich aus den Unter- und Nebenansprüchen.

Die Erfindung geht somit von einer fertig vulkanisierten, ebenen Platte mit einander parallelen Hauptflächen aus. Diese Platte wird dann bogenförmig durchgewölbt und dann durch quer zur Platte und quer zu den seilartigen Verstärkungseinlagen geführte Schnitte in Form von Profilmessern profiliert, und zwar an der die Aussenwölbung bildenden, konvexen Aussenfläche. Nachdem so eine Profilierung ausgeführt ist, wird die Platte vorzugsweise durch ziehende Schnitte in mehrere Gurte aufgeteilt.

Dieses Verfahren kann auch zur Herstellung beidseitig profilierter Gurte benutzt werden, indem zunächst eine und dann die andere Seite der Platte durch Schneiden profiliert wird, natürlich in beiden Fällen im Anschluss an eine Biegeverformung im vorgenannten Sinne.

Wichtig ist dabei auch die Vorbereitung und Erstellung der Platten. Sie können mit zu Scharen zusammengefassten, also zu Gruppen zusammengefügten Verstärkunsgeinlagen versehen sein ( je eine Gruppe würde dann die einem Gurt zuzuordnenden Verstärkungseinlagen enthalten ), um dann die Schnitte zur Bildung der einzelnen Gurte zwischen den einzelnen Scharen oder Gruppen führen zu können. Dabei können jedoch bei der Herstellung der Platten dann Schwierigkeiten entstehen, wenn in dem Übergangszonen der Gruppen lediglich aus Gummi od. dgl. bestehende Bereiche gegeben sind, die bei der Verpressung der Platte zu Verwerfungen der Verstärkungseinlagen führen können. Um diese Fehlermöglichkeit auszugleichen, kann in dem vorerwähnten Bereich ein nicht metallischer Füllkörper z.B. aus Textil vorgesehen werden, der beim Schneiden der einzelnen Gurte zerstört werden kann. Ferner ist es auch möglich, mit zwei Messern zu arbeiten, die zwei parallele Schnitte vollziehen und so anzuordnen sind, dass sie im Grenzbereich eine Verstärkungseinlage zwischen sich einschliessen. Auch so können für die herzustellenden Gurte Randbereiche geschaffen werden, die nur aus Gummi bestehen, also keine seitlich frei austretende Verstärkungseinlagen oder Teile davon aufweisen. Werden z.B. zwei Messer verwendet, so können sie zu beiden Seiten im Kontakt mit dem von ihnen eingschlossenen Festigkeitsträger ( Stahlseil od. dgl. ) eine genaue Führung erfahren.

Es versteht sich, dass die Genauigkeit der Profilielierung praktisch nur von der Messerführung derjenigen Messer abhängt, die durch einen Querschnitt die Profilierung bzw. Nutung bewirken. Wenn ein Abschnitt genutet ist, wird die Platte um einen Längenabschnitt vorgezogen, um so den nächsten Abschnitt nuten zu können.

Weitere Einzelheiten der Erfindung werden anhand der Zeichnung erläutert, in der Ausführungsbeispiele der Erfindung dargestellt sind. Es zeigen :
Fig. 1 eine Gummiplatte mit eingebetteten Stahlseilen im Teilquerschnitt,
Fig. 2 die Platte gemäss Fig. 1 in der Seitenansicht,
Fig. 3 eine Teildraufsicht auf die Platte gemäss Fig. 1,
fig. 4 eine Vorrichtung zum Nuten der Platten gemäss Fig. 1 - 3,
Fig. 5 eine Teildraufsicht auf die Vorichtung gemäss Fig. 4,
Fig. 6 - 8 je Plattenquerschnitte mit Nuten im Teilquerschnitt.

Zur Herstellung der gezahnten Gurte, die vorzugsweise als gezahnte, kämmende Treib- oder Förderriemen benutzt werden sollen, geht man von einer ebenen Platte 1 mit ebener Unterseite 2 und parallel dazu angeordneter, ebenfalls ebener Oberseite 3 aus. Der Körper 4 der Platte besteht aus Gummi, in den mittig in einer Ebene liegend einander parallele Stahlseile eingebettet und durch Vulkanisation festhaftend gebunden sind. Wie nachstehend noch ausgeführt können die mit 5 bezeichneten Stahlseile auch eine abweichende Anordnung bekommen ( vgl. dazu auch die Fig. 5 - 7 ).

Diese Platte 1 wird im gespannten Zustand - der Zug wirkt im Sinne der Pfeile 6 und der in gleicher Richtung verlaufenden Stahlseile 5 - über ein Widerlager 7 gelegt, dessen obere Fläche 8 bogenförmig konvex gestaltet ist. Auf die so geformte Platte 1 wird quer zur Platte 1 bzw. den Stahlseilen 5 ein Schlitten 9 präzise geführt, der an seiner Unterseite drei ( ggfs. aber noch weitere ) Schneidmesser aus etwa bogenförmig geformten Stahlblechen hoher Festigkeit aufweist, die genau der Gestalt der zu schneidenden Vertiefungen 10 entspricht und mit 11 bezeichnet sind.

Nach einem Arbeitsspiel der Werkzeuge 11 werden diese angehoben; und nachdem die Platte 1 um die Werkzeugbreite nachgeführt und wieder gespannt ist, wird ein neuer Schneidvorgang vollzogen. Dieses Arbeitsspiel wiederholt sich so lange, bis die gesamte Platte 1 zu einem verzahnten Gebilde verarbeitet ist. Ggfs. könnte dann noch die andere Seite des Gebildes mit gleicher oder ähnlicher Verzahnung versehen werden, um so einen doppelseitig verzahnten Körper zu erhalten.

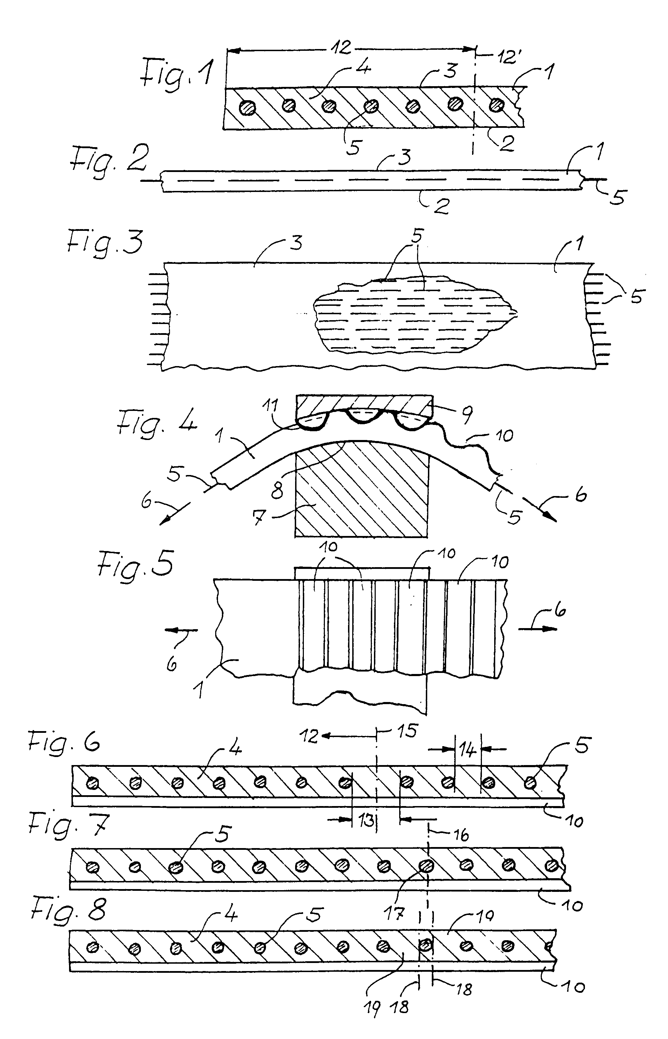

Alsdann wird die verzahnte Platte 1 durch parallel zu den Stahlseilen 5 verlaufende Schnitte in die Gurte oder Riemen 12 aufgeteilt. Haben die Stahlseile 5 über die gesamte Plattenbreite hinweg gleiche Abstände, so wird - wie in Fig. 1 angezeigt - z.B. bei 12′ ein Schnitt geführt, also mittig zwischen zwei benachbarten Stahlseilen 5. Diese Methode ist jedoch nur dann zweckmässig, wenn die Stahlseile 5 einen gehörigen gegenseitigen Abstand haben.

Es ist aufgrund der Erfindung jedoch auch möglich, durch eine bestimmte Vorbereitung und Ausbildung der Platte 1 den späteren Trennschnitten Rechnung zu tragen.

Gemäss Fig. 6 sind die Stahlseile 5 zu einer für einen Riemen od. dgl. ausreichenden Schar zusammengefasst, deren gegenseitiger Abstand 13 grösser ist als der gegenseitge Abstand 14 innerhalb der Schar. Der Trennschnitt 15 wird unter diesen Voraussetzungen im Bereich des Abstandes 13 geführt.

Um die ordnungsgemässe Herstellung der Platten 1 nicht zu gefährden und insb. seitliche Verwerfunfen der Stahlseile 5 zu unterbinden, wenn die Platte 1 verpresst wird, wird im Bereich des vorzusehenden Trennschnittes 16 anstelle eines Stahlseiles 5 ein seilförmiger Füllkörper 17 ( z. B. aus Textil, härterem Gummi ) verwendet, der ein Zerschneiden zulässt ( im Gegensatz zu einem Stahlseil ).

Weiterhin sieht die Erfindung gemäss Fig. 8 einen Doppelschnitt 18 vor; dabei werden die Schnitte nahe an einem Stahlseil 5 zu beiden Seiten geführt.

Diese Ausführung führt zwar zu einem Verlust eines Stahlseiles 5 nach dem Schnitt, doch hat diese Verfahrensweise den Vorteil, dass er auf die Stahlseile 5 Rücksicht nimmt, diese sogar den Verlauf des Schnittes bestimmen. Die Stahlseile 5 über-nehmen sogar die Führung des Schneidwerkzeuges. Unterstellt man eine geometrisch genaue Anordnung der Stahlseile 5 innerhalb der Platte 1, so ist sichergestellt, dass die fertigen Gurte eine gleichmässig dicke Gummischicht 19 an beiden Rändern aufweisen.

Es sei noch erwähnt, dass bei der Herstellung von doppeltverzahnten Riemen od. dgl. bei der Durchführung des zweiten Schneidvorganges auf dem Widerlager 7 die Fläche 8 mit nicht dargestellten Vorsprüngen versehen sein kann, die der im ersten Schneidvorgang bewirkten Verzahnung bzw. Profilierung entsprechen müssen, um so Verformungen des Körpers 4 weitgehend auszuschalten, die er ggfs. erfahren könnte, wenn eine satte Auflage der Fläche 8 nicht gegeben sein sollte bzw. Durchbiegungen aufgrund der Vertiefungen 10 möglich sind.

Ferner wird bemerkt, dass die Platte 1 mit den Verstärkungseinlagen bzw. Stahlseilen 5 zunächst auch erst zum Beispiel unter Benutzung von Klemmbacken gestreckt unter Zug gesetzt werden kann. Alsdann wird durch eine Bewegung des Widerlagers 7 die Platte 1 z.B. durch eine Hubbewegung bogenförmig verformt, worauf dann die erwähnten Bearbeitungen vollzogen werden.

## Patentansprüche

1. Verfahren zur Herstellung von profilierten, gezahnten Gurten aus Gummi oder gummiähnlichen Stoffen mit in Längsrichtung verlaufenden Verstärkungseinlagen (5) insb. in Form von einander parallelen, seilartigen, insb. aus Stahl bestehenden Verstärkungseinlagen, dadurch gekennzeichnet, dass eine eine ebene Ober- und Unterseite (2, 3) aufweisende Platte aus vulkanisiertem Gummi od. dgl. mit eingebetteten Verstärkungseinlagen (5) bogenförmig verformt und im gespannten Zustand an der konvexen Oberfläche in aufeinanderfolgenden Abschnitten durch quer verlaufende Schnitte verzahnt wird.

2. Verfahren nach Anspruch 1, dadurch gekennzeichnet, dass die profilierte Platte (1) durch vorzugsweise parallel zu den Verstärkungseinlagen (5) verlaufende Längsschnitte in mehrere Gurte aufgeteilt wird.

3. Verfahren zur Herstellung von beidseitig verzahnten Gurten nach Anspruch 1, dadurch gekennzeichnet, dass nach Behandlung einer Seite die einseitig profilierte Platte (1) gewendet, bogenförmig verformt, unter Längsspannung gesetzt und dann erneut durch quer verlaufende Schnitte verzahnt wird.

4. Verfahren nach Anspruch 1 und 2, dadurch gekennzeichnet, dass für die platte (1) zu Scharen zusammengefasste Verstärkungseinlagen (5) verwendet werden, wobei der gegenseitige Abstand der Verstärkungseinlagen (5) innerhalb jeder Schar kleiner ist als ihr Abstand zwischen benachbarten Scharen ( Abstand 13 grösser als Abstand 14 ), und dass der Bereich mit dem grösseren Abstand zur Anbringung eines Trennschnittes benutzt wird.

5. Verfahren nach Anspruch 2, dadurch gekennzeichnet, dass ein Teil der Verstärkungseinlagen (5) durch seilartige, durch einen Schnitt (16) bearbeitbare insb. teilbare Einlagen (17) ersetzt wird.

6. Verfahren nach Anspruch 2, dadurch gekennzeichnet, dass der gegenseitige Abstand benachbarter Verstärkungseinlagen (5) zur Durchführung eines Schnittes bemessen wird.

7. Verfahren nach Anspruch 2, dadurch gekennzeichnet, dass zwei Längsschnitte ausgeführt werden, wobei die Schnitte eine Verstärkungseinlage (5) zwischen sich einschliessen.

8. Verfahren nach Anspruch 2 und ggfs. auch nach Anspruch 7, dadurch gekennzeichnet, dass die Schneidwerkzeuge an den Verstärkungseinlagen (5) entlanggeführt werden.

9. Verfahren nach Anspruch 1, dadurch gekennzeichnet, dass die platte (1) praktisch mittig mit in einer Ebene angeordneten, einander parallelen, mit gegenseitigem Abstand angeordneten Stahlseilen (5) als Verst-ärkungseinlagen versehen wird.

10. Verfahren nach Anspruch 1, dadurch gekennzeichnet, dass die Platte (1) so verformt wird, dass auch ihre Verstärkungseinlagen (5) bogenförmig verformt werden.

11. Verfahren nach Anspruch 1, dadurch gekennzeichnet, dass die Platte (1) zunächst gestreckt unter Zugspannung gesetzt und dann z.B. durch Heranführen eines Widerlagers (7) bogenförmig verformt wird.

12. Verfahren nach Anspruch 1, dadurch gekennzeichnet, dass in jedem Abschnitt durch mehrere Werkzeuge (11) in bogenförmiger Anordnung quer verlaufende Schnitte vollzogen werden.

13. Die Verwendung von profilierten, gezahnten Gurten aus Gummi oder gummiähnlichen Stoffen mit in Längsrichtung verlaufenden Verstärkungseinlagen (5), hergestellt aus einer eine ebene Ober- und Unterseite (2,3) aufweisenden Platte (1) aus vulkanisiertem Gummi mit eingebetteten Verstärkungseinlagen (5), die bogenförmig verformt und im gespannten Zustand an der konvexen Oberfläche (8) in aufeinanderfolgenden Abschnitten durch quer verlaufende Schnitte verzahnt wird, als gezahnte Treibriemen und gezahnte Fördergurte.

14. Werkzeug zur Herstellung von profilierten, gezahnten Gurten aus Gummi oder gummiähnlichen Stoffen mit in Längsrichtung verlaufenden Verstärkungseinlagen, gekennzeichnet durch ein Widerlager (7) mit bogenförmig konvex gestalteter Oberfläche (8) zur Anlage einer der Gurtherstellung dienenden Platte (1), wobei quer zur Platte (1) bzw. den Verstärkungseinlagen (5) ein Schlitten (9) geführt wird, der an seiner gegenüber der Oberfläche (8) liegenden Unterseite Schneidmesser aufweist, die der Gestalt der zu schneidenden Profiele entsprechen.

15. Werkzeug nach Anspruch 14 dadurch gekennzeichnet, daß zur Herstellung von beidseitig profilierten, gezahnten Gurten die konvexe Oberfläche (8) mit der Verzahnung entsprechenden Vorsprügen versehen ist in der Weise, daß eine bereits gezahnte Seite der Platte (1) auf der Oberfläche (8) eine satte Auflage findet.

## Claims

1. Method of producing profiled, toothed belts formed from rubber or rubber-like substances and provided with longitudinally extending reinforcing inserts (5), more especially in the form of cable-like reinforcing inserts which extend parallel to one another and are, more especially, formed from steel, characterised in that a plate, having flat upper and lower surfaces (2, 3) and formed from vulcanised rubber or the like with reinforcing inserts (5) embedded therein, is shaped in an arcuate manner and toothed by transversely extending cuts in successive portions on the convex surface in the tensioned state.

2. Method according to claim 1, characterised in that the profiled plate (1) is divided into a plurality of belts by longitudinal cuts, which preferably extend parallel to the reinforcing inserts (5).

3. Method of producing bilaterally toothed belts according to claim 1, characterised in that, after one surface has been treated, the unilaterally profiled plate (1) is turned-over, shaped in an arcuate manner, placed under longitudinal tension and then toothed afresh by transversely extending cuts.

4. Method according to claims 1 and 2, characterised in that reinforcing inserts (5), which are combined to form bands, are used for the plate (1), the mutual spacing between the reinforcing inserts (5) internally of each band being smaller than their spacing between adjacent bands (spacing 13 greater than spacing 14), and in that the region having the greater spacing is used to make a separation cut.

5. Method according to claim 2, characterised in that some of the reinforcing inserts (5) are replaced by cable-like inserts (17), which are processable, more especially divisible, by a cut (16).

6. Method according to claim 2, characterised in that the mutual spacing between adjacent reinforcing inserts (5) is measured in order to make a cut.

7. Method according to claim 2, characterised in that two longitudinal cuts are made, the cuts enclosing one reinforcing insert (5) therebetween.

8. Method according to claim 2 and possibly also according to claim 7, characterised in that the cutting tools are guided along the reinforcing inserts (5).

9. Method according to claim 1, characterised in that the plate (1) is provided virtually centrally with steel cables (5) as the reinforcing inserts, such cables being disposed in one plane, extending parallel to one another and being disposed with a mutual spacing therebetween.

10. Method according to claim 1, characterised in that the plate (1) is so shaped that its reinforcing inserts (5) are also shaped in an arcuate manner.

11. Method according to claim 1, characterised in that the plate (1) is initially elongated, placed under tensile stress and then, for example, shaped in an arcuate manner by the provision of a support (7).

12. Method according to claim 1, characterised in that transversely extending cuts are made in an arcuate disposition in each portion by means of a plurality of tools (11).

13. The use of profiled, toothed belts formed from rubber or rubber-like substances and provided with longitudinally extending reinforcing inserts (5), said belts being produced from a plate (1), which has flat upper and lower surfaces (2, 3) and is formed from vulcanised rubber with reinforcing inserts (5) embedded therein, said plate being shaped in an arcuate manner and being toothed by transversely extending cuts in successive portions on the convex surface (8) in the tensioned state, such use being as toothed drive belts and toothed conveyor belts.

14. Tool for producing profiled, toothed belts formed from rubber or rubber-like substances and provided with longitudinally extending reinforcing inserts, characterised by a support (7) having a surface (8) of an arcuate, convex configuration for the fitting of a plate (1), which is used for the production of belts, a slide member (9) being guided transversely relative to the plate (1) or relative to the reinforcing inserts (5) and having cutting blades, which correspond to the configuration of the profiles to be cut, on its lower surface situated opposite the surface (8).

15. Tool according to claim 14, characterised in that, to produce bilaterally profiled, toothed belts, the convex surface (8) is provided with projection members, which correspond to the toothing, in such a manner that an already toothed surface of the plate (1) rests fully on the surface (8).

## Revendications

1. Procédé de fabrication de courroies profilées dentées en caoutchouc ou en matières analogues au caoutchouc, ayant des inserts de renforcement (5) s'étendant dans la direction longitudinale, notamment sous forme d'inserts de renforcement de type à câbles parallèles entre eux, notamment en acier, caractérisé en ce qu'il consiste à déformer en arc-de-cercle une plaque en caoutchouc vulcanisé ou analogue comportant des faces supérieure et inférieure (2, 3) planes et munies d'inserts de renforcement (5) enrobés, et à la denter à l'état tendu sur la face convexe dans des tronçons successifs par des entailles s'étendant transversalement.

2. Procédé suivant la revendication 1, caractérisé en ce qu'il consiste à subdiviser la plaque (1) profilée en plusieurs courroies par des coupes longitudinales s'étendant, de préférence, parallèlement aux inserts de renforcement (5).

3. Procédé de fabrication de courroies dentées sur les deux faces suivant la revendication 1, caractérisé en ce qu'il consiste à déformer en arc-de-cercle, après le traitement d'un côté, la plaque (1) profilée d'un seul côté, à la mettre sous tension longitudinale et à la denter ensuite à nouveau par des entailles s'étendant transversalement.

4. Procédé suivant la revendication 1 ou 2, caractérisé en ce qu'il consiste à utiliser, pour la plaque (1), des inserts de renforcement réunis en groupes, l'intervalle mutuel entre les inserts de renforcement (5) dans chaque groupe étant inférieur à l'intervalle entre des groupes voisins (intervalle 13 plus grand qu'intervalle 14) et à utiliser la région ayant l'intervalle de plus grand pour ménager une coupe de séparation.

5. Procédé suivant la revendication 2, caractérisé en ce qu'il consiste à remplacer une partie des inserts de renforcement (5) par des inserts de type à câble pouvant être façonnés et notamment séparés par une coupe (16).

6. Procédé suivant la revendication 2, caractérisé en ce qu'il consiste à mesurer l'intervalle mutuel entre des inserts de renforcement (5) voisins pour effectuer une coupe.

7. Procédé suivant la revendication 2, caractérisé en ce qu'il consiste à effectuer deux coupes longitudinales, les coupes incluant entre elles un insert de renforcement (5).

8. Procédé suivant la revendication 2 et, le cas échéant, également la revendication 7, caractérisé en ce qu'il consiste à faire passer les outils de coupe le long des inserts de renforcement (5).

9. Procédé suivant la revendication 1, caractérisé en ce qu'il consiste à munir la plaque (1) pratiquement au milieu, en tant qu'insert de renforcement, de câbles (5) en acier disposés dans un plan et parallèlement les uns aux autres à un certain intervalle.

10. Procédé suivant la revendication 1, caractérisé en ce qu'il consiste à déformer la plaque (1) de manière à ce que ses inserts de renforcement (5) se déforment également en arc.

11. Procédé suivant la revendication 1, caractérisé en ce qu'il consiste à étirer d'abord la plaque (1) et à la mettre sous une tension d'étirage, puis à la déformer en arc par exemple en l'approchant d'une butée (7).

12. Procédé suivant la revendication 1, caractérisé en ce qu'il consiste à effectuer, dans chaque tronçon par plusieurs outils (11), des coupes s'étendant transversalement suivant une disposition en arc-de-cercle.

13. L'utilisation de courroies profilées dentées en caoutchouc en matières analogues au caoutchouc ayant des inserts de renforcement (5) s'étendant dans la direction longitudinale, fabriquées à partir d'une plaque (1) en caoutchouc vulcanisé, ayant des inserts de renforcement (5) enrobés et des faces supérieure et inférieure (2, 3) planes, qui est déformée en arc-de-cercle et qui est dentée à l'état tendu sur la face (8) convexe en des tronçons successifs par des entailles s'étendant transversalement, comme courroies d'entraînement dentées et comme courroies de transport dentées.

14. Outil de fabrication de courroie dentées profilées en caoutchouc ou en matières analogues au caoutchouc, ayant des inserts de renforcement s'étendant dans la direction longitudinale, caractérisé par une butée (7) de surface (8) convexe en forme d'arc, destinée à venir en contact avec une plaque (1) servant à la fabrication de courroies, un chariot (9) qui comporte, sur sa face inférieure en regard de la surface (8), des couteaux de forme correspondant au profilé à découper étant guidés transversalement à la plaque (1) et aux inserts de renforcement (5).

15. Outil suivant la revendication 14, caractérisé en ce que, pour fabriquer des courroies profilées dentées des deux côtés, la surface (8) convexe est munie de parties saillantes correspondant à la denture, de manière qu'un côté déjà denté de la plaque (1) puisque bien s'appuyer sur la surface (8).
